# EUROPEAN PATENT SPECIFICATION

(11) **EP 3 794 530 B1**
(45) Date of publication and mention of the grant of the patent: **12.08.2026**
(21) Application number: 19728832.7
(22) Date of filing: 20.05.2019
(51) Int. Cl.: G06Q 10/08, G06Q 10/0833, G06Q 10/087, G06Q 10/0832

(54) **METHOD OF TRACKING DONATED AND DISPOSED FOOD PRODUCT ITEMS**
VERFAHREN ZUR VERFOLGUNG VON GESPENDETEN UND WEGGEWORFENEN NAHRUNGSMITTELN
PROCÉDÉ DE SUIVI D'ARTICLES ALIMENTAIRES DONNÉS ET ÉLIMINÉS

(30) Priority: 18.05.2018 US 201862673311 P
(43) Date of publication of application: 24.03.2021
(73) Proprietor: Avery Dennison Retail Information Services LLC, Mentor, OH 44060 (US)
(72) Inventor: DUCKETT, Jeanne, Mentor, Ohio 44060 (US); CARRION, Txus, Mentor, Ohio 44060 (US); PORTER, Lori, Mentor, Ohio 44060 (US); SCHABERL, Michael, Mentor, Ohio 44060 (US); DAUM, Susan, Mentor, Ohio 44060 (US)
(74) Representative: HGF
(86) International application number: PCT/US2019/033114
(87) International publication number: WO 2019/222739

(56) References cited:
- US-A1- 2016 328 190
- US-A1- 2017 011 362
- US-A1- 2017 076 249

## Description

### BACKGROUND

The present invention relates generally to a traceability application or system and, more specifically, to a method for tracking donated food product items, as well as those intended for disposal. The traceability application of the present invention allows for traceability of the food product item from its generation to its ultimate delivery to a donation center, disposal site or other location, and provides transparency into the socio and environmental impacts of the food products. The application of the present invention is particularly suitable for food products prepared within a restaurant or other food service location, such as a bar, mobile kitchen, hotel, soup kitchen, etc. Accordingly, the present specification makes specific reference thereto. However, it is to be appreciated that aspects of the present invention are also equally amenable to other like applications and devices.

Due to a variety of reasons that are not limited to resource conservation, landfill reduction, food insecurity, and customer awareness of landfill use, the need to develop more efficient ways of tracking food waste and food donations is becoming increasingly self-evident. By way of example, every day seems to bring a new food recall. There are also growing environmental, socio-economic and ethical issues and concerns surrounding the amount of food waste occurring on a daily basis. For example, it has been reported that Americans alone waste as much as 150,000 tons of food each day, and that, annually, the wasted food was grown on the equivalent of over 30 million acres of cropland, or approximately 7.5% of all harvested cropland in the United States. Therefore, the role of automatic identification and data capture in relation to food waste donation and/or disposal is critical to process improvement and transparency.

In addition, there are various federal, state and local requirements relating to the safety, tracking and tax status of donated food items. Today, many food preparers, processors and providers are hesitant to donate food items to needy organizations or individuals because of concerns over liability even though the Food Donation Act of 2017 expanded liability protection to food donors.

Additionally, today's consumers are becoming increasingly concerned about food product transparency and the socio and environmental impacts of said food product items. While there has been literature written about the need for traceability in the foodservice industry, there are no practical implementations of tracing food from its generation or preparation through to the consumer, or the ultimate donation or disposal of the food product. Several reasons for the lack of a practical solution exist.

First, the skill level and available time of the average foodservice worker is relatively limited, thereby reducing the potential of using complex food traceability systems that require multiple steps. Second, available food traceability technology in the kitchen and other food preparation locations is somewhat limited and typically consists of manual processes requiring the careful recording of information, use of color dots, and finally transcribing the information into a digital record, all of which is not only time consuming, but cost prohibitive and prone to human error.

Therefore, there exists in the art a long felt need for an automated method of tracing food products from their origin (e.g., a kitchen or other food preparation location) to their delivery to a consumer, donation or the ultimate disposal of the food product item as waste. There is also a long felt need in the art for an automated method of tracing food products that includes processing, identifying, data capturing and logging donated food and wasted food items for foodservice providers. Moreover, having the ability to trace food products from their origin to their ultimate destination will enable governments, companies and individuals in the food production chain to improve the overall quality and safety of food product items, reduce hunger and food waste, and improve overall efficiencies and the sustainability of valuable resources used in the food product production process.

US 2016/328190 discloses a method for printing certain information on labels using a smart device. Product-related information, expiration information, and batch information is stored on a server and provided to a smart device. One of the products or batches is selected using the smart device. Labels incorporating certain product-related information are generated and sent to a printer. US 2017/076249 discloses that at least one storage device associated with a user and at least one disposal device associated with the user is determined. At least one food item input to the at least one storage device is determined. At least one food item output to the at least one disposal device is determine. At least one food recommendation is provided to the user. The at least one food recommendation is determined using the at least one food item input to the at least one storage device, the at least one food item output to the at least one disposal device, and a machine learning model associated with the user. US 2017/011362 discloses systems, methods and devices for tracking and managing waste or recyclable materials, which may include one or more devices enabled to capture and record information about waste material at a point in a distribution chain, as well as information technology systems for collecting, processing, analyzing and otherwise managing information about a large number and variety of streams of waste material.

### SUMMARY

The following presents a simplified summary in order to provide a basic understanding of some aspects of the disclosed innovation. This summary is not an extensive overview, and it is not intended to identify key/critical elements or to delineate the scope thereof. Its sole purpose is to present some concepts in a simplified form as a prelude to the more detailed description that is presented later. The scope of protection is defined by the appended claims.

The subject matter disclosed and claimed herein, in one aspect thereof, comprises a method for tracing donated food product items and those food product items designated for disposal. The traceability application of the present invention allows for traceability of the food product item from its generation to its ultimate delivery to a donation center, disposal site or other location, and provides transparency into the socio and environmental impacts of the food products. As discussed herein, food product traceability refers to the ability to record and retain the "what, where, when, and why" of each action taken in a food product lifecycle from generation to transformation, consumption, donation or disposal.

The automated food product traceability method of processing, identifying, data capturing and logging donated food and wasted food product items for foodservice providers is primarily comprised of an application having the following three processes: (1) the configuration and setup of the application for the food product items that will be donated or disposed of; (2) the execution of the food product item donation or disposal event wherein labels with the appropriate information about the food product item and/or the event can be printed by, for example, an intelligent barcode printer enabled with interfaced sensor inputs, and/or the data captured in a data log; and (3) the viewing and/or extraction and further processing of the captured data from the data log of the updates to the donated food or wasted food information.

The method of the present invention may be used in conjunction with an intelligent printer, such as a RFID, quick response (QR), or barcode printer, that may be enabled with interfaced sensor inputs to process and track food waste and donation including the proper posting of critical track event information for a shipping event (donation) or disposal of a food product event (waste) to, for example, a memory storage device, a user display, or a database contained in a local server, cloud based database or a hyper ledger format. In the case of a shipping event (donation), the ownership of the food product item may be transferred from the foodservice operator to, for example, a charitable institution. A shipping event (donation) occurs when a traceable food product item is dispatched from one defined location to another defined location. A disposable event (waste) is where a traceable food product item is destroyed, discarded, or handled in a manner that the product can no longer become available to consumers.

To enable more enhanced and detailed data tracking and analysis, the application and method of the present invention allows the administrator or user to define food product grouping or sorting categorizations. This includes food categories and sub-categories, departments, food types, recipient options, and the reasons for the donation or disposal of the food product item. The method of the present invention also provides for the creation of a label that can be applied to the donated food product containers for ease of identification and freshness dating. Similar visual identification of food product items can be made with labels, but without the freshness dating, for those food product items designated for disposal.

Further, an internally captured data log of the updates of the donated or disposed of food product information may be kept for viewing at a later time at the discretion of an administrator, either locally on the printer or remotely after data extraction. This captured data log may be incrementally modified for every donated food or wasted food information update, and may also keep all data log records until a predetermined fixed file size or other user selected milestone is reached. The data log may then be stored in a local location and a new data log started. When the new data log file reaches the predetermined fixed file size or other user selected milestone, the new data log file may be stored and the first stored data file may be overwritten or transferred to a secondary location.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

### BRIEF DESCRIPTION OF THE FIGURES

FIG. 1 illustrates a flowchart depicting one possible method of the present invention for configuring a traceability application to track the donation or disposal of a food product item.
FIG. 2 illustrates one possible example of the attributes that can be assigned to the food product of FIG. 1.
FIG. 3A illustrates a flowchart depicting one possible method of the present invention for executing the traceability application of FIG. 1, wherein the food product is to be donated and/or consumed.
FIG. 3B illustrates a flowchart depicting one possible method of the present invention for executing the traceability application of FIG. 1, wherein the food product is to be wasted.
FIG. 4 illustrates a flowchart depicting one possible method of selecting a food product item for inclusion in the method depicted in FIGS. 3A or 3B.
FIG. 5 illustrates a flowchart depicting one possible method that an administrator or user may utilize to access or manipulate the data about the food product item gathered by the methods of FIGS. 3A or 3B.
FIG. 6 illustrates one possible embodiment of a user or administrator display screen.
FIG. 7A illustrates one possible label format that may be generated by the methods of the present invention.
FIG. 7B illustrates an alternative label format that may be generated by the methods of the present invention.
FIG. 7C illustrates a further alternative label format that may be generated by the methods of the present invention.
FIG. 7D illustrates a further alternative label format that may be generated by the methods of the present invention.
FIG. 7E illustrates a further alternative label format that may be generated by the methods of the present invention.
FIG. 7F illustrates a further alternative label format that may be generated by the methods of the present invention.
FIG. 8 illustrates one possible data record format that can be created and managed by the methods of the present invention.
FIG. 9 illustrates one possible dashboard view of traceability data that can be exhibited to a user as the result of the methods of the present invention.
FIG. 10 illustrates a perspective view of one possible embodiment of an intelligent printer that could be used in conjunction with the methods of the present invention.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

As previously mentioned, the automated food product traceability method of processing, identifying, data capturing and logging donated food and wasted food product items for foodservice providers is primarily comprised of a software application having the following three processes: (1) the configuration and setup of the application for the food product items that will be donated or disposed of; (2) the execution of the food product item donation or disposal event wherein labels with the appropriate information about the transaction may be printed by, for example, an intelligent barcode printer enabled with interfaced sensor inputs, and/or the data captured in a data set or data log; and (3) the viewing and/or extraction and further processing of the captured data from the data log of the updates to the donated or disposed of food product information.

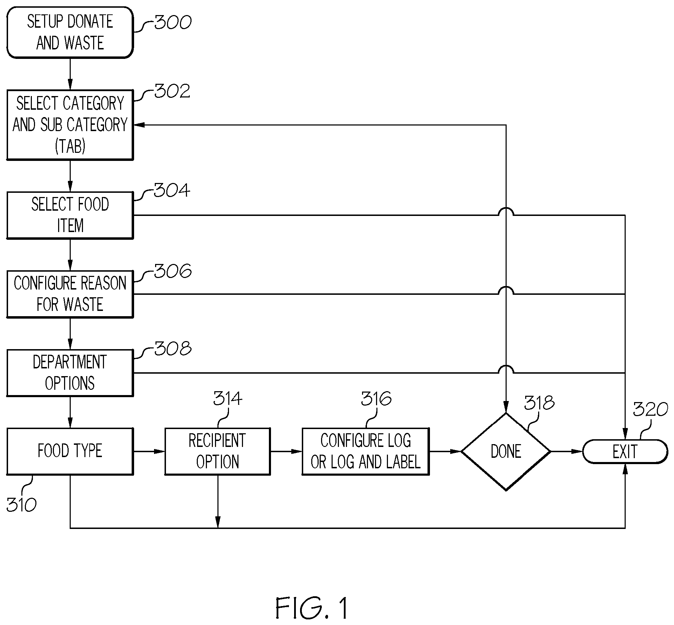

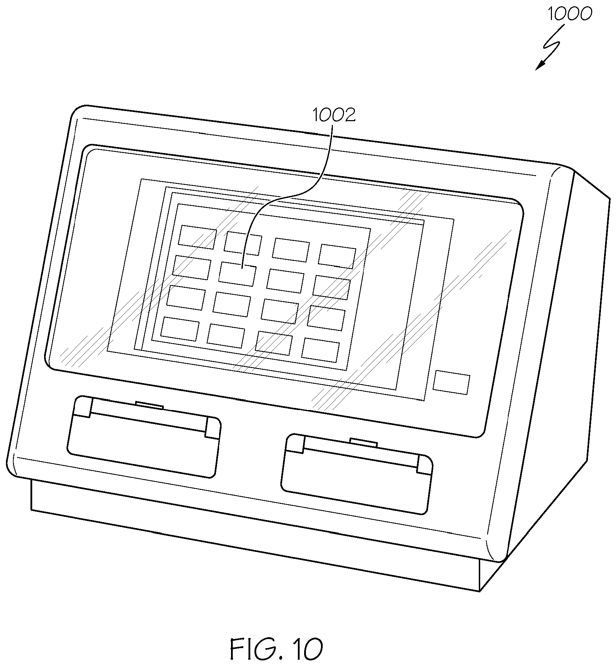

To initiate the application configuration and setup phase of the food product items to be captured and traced prior to their consumption, donation or disposal, it is first necessary to identify what ready-to-eat food products or food product ingredients are available to be consumed, donated or disposed of. FIG. 1 illustrates a flowchart depicting one possible method of the present invention for configuring a traceability application or system to track the donation or disposal of a food product item that can reside on an intelligent printer, a smart device or a traditional personal computer, such as the intelligent barcode printer depicted in FIG. 10. More specifically, the configuration and set-up phase of the method begins when a user, such as an administrator (not shown), enters the process at step 300. At step 302, the user selects a category of food product items and/or sub-category of food product items from a pre-existing list of categories or sub-categories in the application, or has the option of creating a new food product item category or sub-category if the needed category or sub-category doesn't currently exist in the application. The use of categories and sub-categories within the application allows the food product items to be grouped or positioned for ease of transfer, extraction and further data processing. The user then has the option of proceeding to step 304, or to exit the application at step 320 via step 318. For example, the user may have entered into the process at step 300 for the sole purpose of creating a new category or sub category of food product items at 302, but is not yet ready to designate a specific food product item for donation or disposal.

At step 304, the user may select a specific food item from a pre-existing list of food items in the selected category or sub-category of food product items of step 302, or has the option of creating a new food product item if the needed food product item to be donated or disposed of doesn't currently exist in the application. The user then has the option of proceeding to step 306, or to exit the application at step 320.

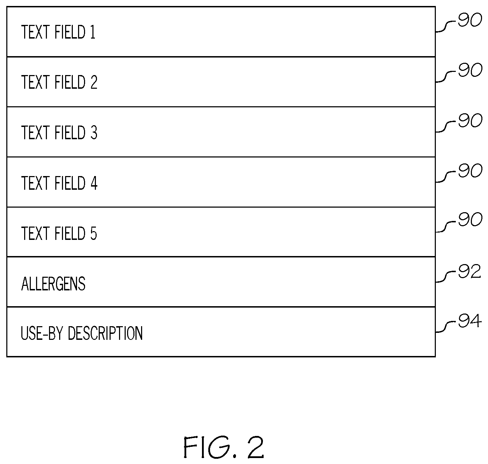

At step 306, the user may configure or assign a reason for donating or disposing of the food product item, and can attribute other useful information about the food product item in a plurality of text and/or data fields to further populate the data set for the food product item. For example, the user may be donating the food product item because it is no longer needed, is surplus or is nearing the end of its shelf life, "best used by" date, etc. The application allows the administrator or user to create, edit and select the reasons for the donation or disposal, which can be either generic or specific to the administrator/user. Additionally, information related to the creation or source of the food product item may also be included in the text fields 90 illustrated in FIG. 2, including, without limitation, a description of the food product item, a unique identifier or GTIN, a batch/lot number, the quantity of the food product item to be donated or disposed of, its creation date, etc. Additional information may also be assigned to specific purpose fields including, without limitation and by way of example only, an allergen field 92, a "use-by" field 94, etc., as best shown in FIG. 2. Nonetheless, it will be appreciated by those of ordinary skill in the art that the above categories of information and food product item attributes are for illustrative purposes only, and that many other types of information and/or attributes can also be used to create the desired data set and to suit user need or preference. At the conclusion of step 306, the user has the option of proceeding to step 308, or to exit the application at step 320.

At step 308, the user can select from a preexisting list of departments to which the donation or disposal of the food product item will be attributed. Alternatively, the user has the option of creating a new department if the needed department doesn't currently exist within the application. More specifically, the application allows the user to create, edit and select departments that can be either generic or specific to the user. At the conclusion of step 308, the user has the option of proceeding to step 310, or to exit the application at step 320.

At step 310, the user can select a food type or item from an existing list of available food types within a category or a sub-category, or create a new food type or item if the desired food type or item doesn't currently exist within the application. The existing list of food types or items may be either generic or custom, based on the level of detail that the user desires or prefers. At the conclusion of step 310, the user has the option of proceeding to step 314, or to exit the application at step 320.

At step 314, the user can select the appropriate recipient of the food product item to be donated or disposed of from an existing list of recipients within the application. Alternatively, the user can enter a new recipient to receive the food product item if the desired recipient doesn't currently exist within the application. Additional information about the recipient beyond its identity may also be entered, edited or deleted. For example, information about the recipient's location, preferences, needs, limitations
(e.g., allergens in the case of donated food items or land based restrictions in the case of disposed food items), and any other useful information that suits user need or preference can be added to the data set. At the conclusion of step 314, the user has the option of proceeding to step 316, or to exit the application at step 320.

At step 316, the user may also select whether to log the food item as waste, or log and label the food item as a donation before completing the process at step 318. Upon completion at 318, the user can exit the application at 320 or return to step 302 to process an additional food product item for donation or disposal.

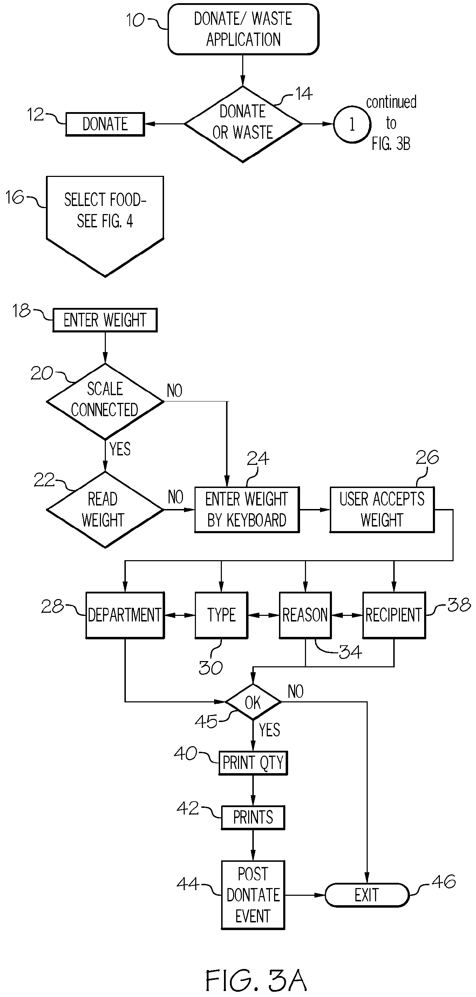

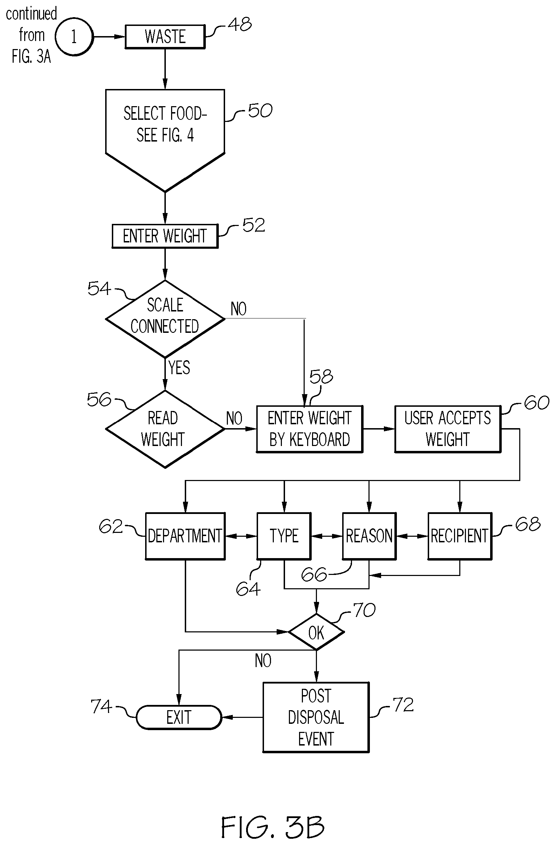

Following the application setup and configuration phase, the user may proceed to the implementation or execution phase, as best illustrated in FIGS. 3A and/or 3B depending upon the path chosen (i.e., disposal or donation of the food product item). More specifically, FIG. 3A illustrates a flowchart depicting one possible method of the present invention for executing the traceability application/method of FIG. 1, wherein the food product item is to be donated and/or consumed, and FIG. 3B illustrates a flowchart depicting one possible method of the present invention for executing the traceability application/method of FIG. 1, wherein the food product item is to be wasted or disposed of. In either instance, the user enters the implementation phase of the application at step 10 and makes a determination of whether to donate 12 (as illustrated in FIG. 3A) or dispose 48 (as illustrated in FIG. 3B) of the food product item.

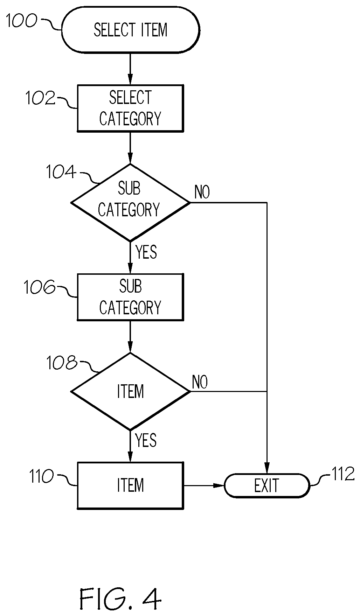

If donation of the food product item is chosen, the user proceeds to step 16, wherein the user enters the process depicted in FIG. 4 of selecting the food item to be donated. More specifically, the food item selection subroutine is entered at step 100. At step 102, the user selects the appropriate food item category (i.e., from those categories configured at step 302 in FIG. 1) and proceeds to step 104 where the user determines if there is an appropriate food item sub-category (i.e., from those sub-categories configured at step 302 in FIG. 1). If an appropriate sub-category doesn't exist, the user may exit the subroutine at step 112 and return to the configuration phase to create an appropriate sub-category. If, on the other hand, an appropriate sub-category of food product item does exist, the user may select the same at step 106 and proceed to step 108.

At step 108, the user determines if there is an appropriate food item within the sub-category (i.e., from those food items configured at step 304 in FIG. 1). If an appropriate food item doesn't exist, the user may exit the subroutine at step 112 and return to the configuration phase to create an appropriate food item. If, on the other hand, an appropriate food item does exist, the user may select the same at step 110, proceed to exit the subroutine at step 112 and return to step 18 in FIG. 3A to enter the weight of the food product item. At step 20, a determination is made as to whether a weighing scale is attached for automatic transfer of the weight of the food product item to the application. If a weighing scale is present and the weight of the food item is successfully read, the weight may be accepted by the user at step 26 and the process continues as described below. If, on the other hand, a weighing scale is not present or if the weighing scale is unable to successfully determine the weight of the food product item to be donated, the weight may be manually determined and entered into the system by the user at step 24, and accepted by the user at step 26.

After the weight of the food product item is accepted at step 26, the user has the option of inputting one or more of the following: the department name or information at step 28, the food product type at step 30, the reason for the food product item donation at step 34, and/or the recipient information at step 38. The importance of and different types of information included in each of these categories is described supra. As also explained above, the user will have already configured each of these categories in the configuration phase of the method of the present invention. Nonetheless, if the need now exists to make additions, deletions or otherwise edit the options available in any of these categories, the user may return to the configuration phase of the application via step 45 and exit the process at step 46 to complete the same. At such time, the user can return to the donate implementation process delineated in FIG. 3A.

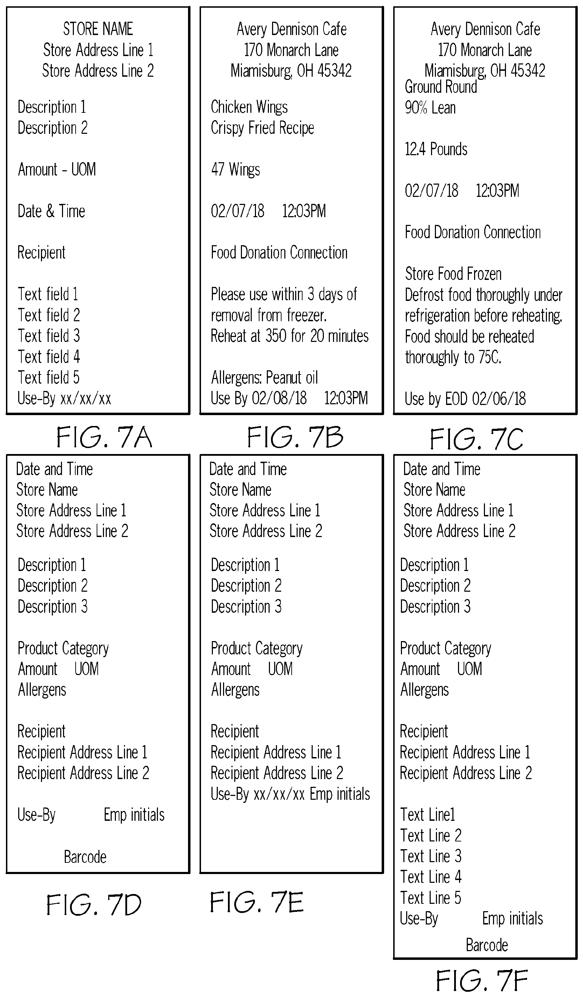

If, on the other hand, the user is successful in entering the appropriate information at one or more of steps 28, 30, 34 and 38, the user will proceed to step 40 where an appropriate print quantity can be selected and the appropriate information from the data set and/or labels may be printed at step 42. As explained more fully below, FIGS. 7A-F illustrate the general nature and content of the types of labels that can be printed and or stored at step 42. Also, the food item donation event may be posted from the printer 1000 to a database contained in a local server, cloud based database, or a hyper ledger format in addition to being stored in a local transaction log at step 44. After the labels are printed and/or the data is stored, the process exits at step 46.

By comparison, if the decision is made at step 14 in FIG. 3A to dispose of the food product item at step 48, the process proceeds as illustrated in FIG. 3B. More specifically, at step 50, the user enters the food item selection subroutine depicted in FIG. 4, and enters the process of selecting the food product item to be disposed of at step 100. At step 102, the user selects the appropriate food item category (i.e., from those categories configured at step 302 in FIG. 1) and proceeds to step 104 where the user determines if there is an appropriate food item sub-category (i.e., from those sub-categories configured at step 302 in FIG. 1). If an appropriate food item sub-category doesn't exist, the user may exit the subroutine at step 112 and return to the configuration phase (depicted in FIG. 1) to create an appropriate sub-category. If, on the other hand, an appropriate sub-category of food product item to be disposed of does exist, the user may select the same at step 106 and proceed to step 108.

At step 108, the user determines if there is an appropriate food item within the sub-category (i.e., from those food items configured at step 304 in FIG. 1). If an appropriate food item doesn't exist, the user may exit the subroutine at step 112 and return to the configuration phase depicted generally in FIG. 1 to create an appropriate food item. If, on the other hand, an appropriate food item does exist, the user may select the same at step 110, proceed to exit the subroutine at step 112 and return to step 52 in FIG. 3B to enter the weight of the food product item. At step 54, a determination is made as to whether a weighing scale is attached to the application for automatic transfer of the weight of the food product item to the application. If a weighing scale is present and the weight of the food product item is successfully read, then the weight is accepted by the user at step 60 and the process continues as described below. If, on the other hand, a weighing scale is not present or if the weighing scale is unable to successfully determine the weight of the food product item to be disposed of, the weight may be manually determined and entered into the system by the user at step 58, and accepted at step 60.

After the weight is accepted at step 60, the user has the option of inputting one or more of the following: the name or other information about the department at step 62, the food type at step 64, the reason for the food item disposal at step 66 (e.g., past its expiration date, spoliation, etc.), and/or the recipient information at step 68. The importance of and different types of information included in each of these categories is described supra. As also explained above, the user will have already configured each of these categories in the configuration phase depicted in FIG. 1. Nonetheless, if the need now exists to make additions, deletions or otherwise edit the options available in any of these categories, the user may return to the configuration phase of the application via step 70 and exit the process at step 74 to complete the same. At such time, the user can return to the process delineated in FIG. 3B.

If, on the other hand, the user is successful in entering the appropriate information at one or more of steps 62, 64, 66 and 68, the user will proceed to step 72 where an appropriate print quantity can be selected and the appropriate information from the data set and/or labels may be printed (similar to steps 40 and 42 in FIG. 3A), and the food item disposal event and its related data sets may be posted from the printer 1000 to a database contained in a local server, cloud based database, or a hyper ledger format in addition to being stored in a local transaction log. After the labels are printed and/or the data is stored, the process exit at step 74.

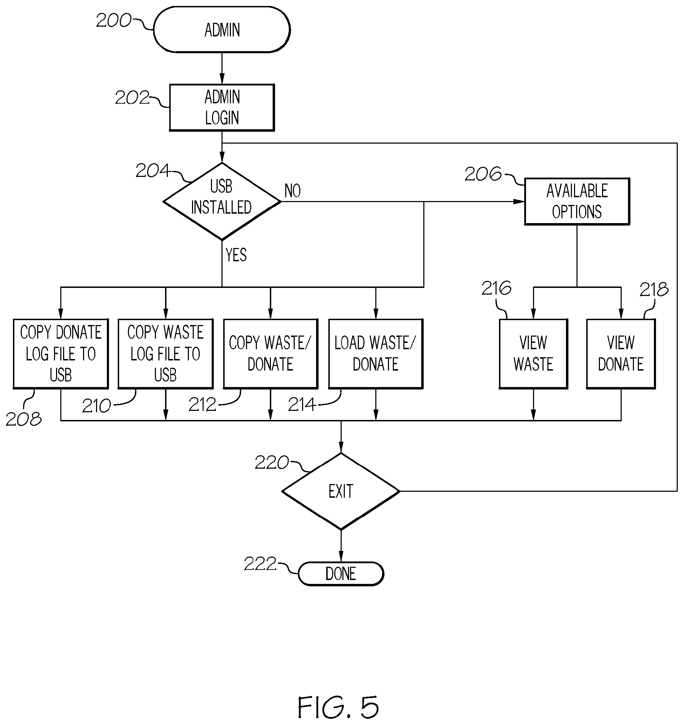

Following the implementation phase of the application, the user may proceed to the administrative or viewing and/or extraction of the captured data phase, as best illustrated in FIG. 5. More specifically, FIG. 5 illustrates a flowchart depicting one possible method that an administrator or user may utilize to access or manipulate the data about the donated or disposed of food product items gathered by the methods shown generally in FIGS. 3A or 3B. The extraction of the stored data files can occur through any means commonly known in the art for extracting data including, without limitation, extraction to a USB memory drive, through data transmission via a suitable protocol through the network connections, etc.

A user may enter the administrative process of the application at step 200, and officially login at step 202. The administrative login process may be password protected to protect the integrity of the application and the data sets that reside therein. At step 204, a determination is made as to whether an appropriate external memory device such as a USB is installed. If such a memory device is not installed, at step 206 the user is presented with the following options before exiting the process at steps 220/222: (a) the printer will use a suitable protocol such as FTP or SFTP to post or view the food product item donation logs on a user display 1002 or (b) the printer will use a suitable protocol such as FTP or SFTP to post or view the food product item disposal/waste logs on a user display 1002. When the user is finished posting or viewing the appropriate logs, the user proceeds to step 220 to determine whether to exit the administrative process at step 222, or return for more data processing at step 204.

If, on the other hand, a memory device such as a USB is installed, the process proceeds and the following options are available to the user for the memory device: (a) copy the donate log file to the memory device at step 208; (b) copy the disposal/waste log file to the memory device at step 210; (c) copy the donate and/or disposal/waste log files to an alternate memory location, such as an internal memory location or a cloud-based or other external memory location, at step 212; and/or (d) load the donate and/or disposal/waste log files to the user display 1002 at step 214 for viewing by the user. It is also contemplated that the data sets and related data logs can be transferred to a local server, network, cloud based application or hyper ledger for further sharing and/or processing by a user or authorized third party, and that the system could also create the appropriate Electronic Product Code Information Services (EPICS) event record which could also be transferred to a local server, network, cloud based application or hyper ledger. Once the user desired tasks have been completed, the user can exit the administrative process at steps 220/222, or return for more data processing options at step 204. The user can also access, read and store the configuration information and transactional logs.

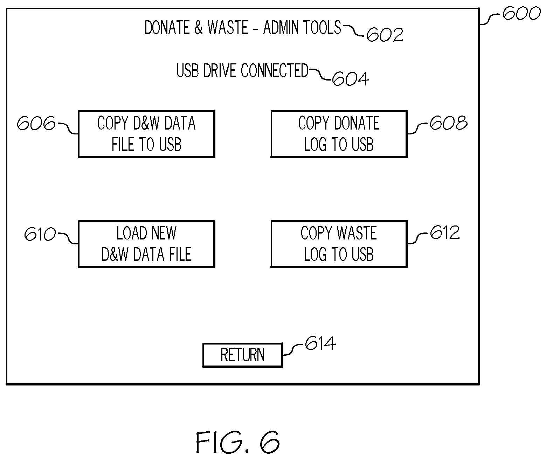

FIG. 6 illustrates one possible embodiment of a user or administrator screen 600 that may be used in conjunction with the above described process. For example, screen 600 may be comprised of the following non-exhaustive list of options and/or attributes: (a) a title 602, (b) a status of the memory device 604; (c) an ability to copy the donate and/or disposal/waste data files to a memory device 606; (d) an ability to copy the donate log to a memory device 608; (e) an ability to load new donate and/or disposal/waste data files 610; (f) an ability to copy the waste log to a memory device 612; and (g) the ability to return to the previous screen or exit the system at 614. Nonetheless, it will be appreciated by those of ordinary skill in the art that the above options and attributes are for illustrative purposes only, and that many other options and/or attributes can also be employed to suit user need or preference. For example, additional options may also be included that relate to the posting of the traceability data to a local server, network, cloud based application or hyper ledger for further sharing and/or processing by a user or authorized third party, or that relate to the creation of EPICS event records, as referenced above.

Further, an internally captured data log of the updates of the donated food or wasted food information may be kept for viewing at a later time at the discretion of an administrator, either locally on the printer or remotely after data extraction. This captured data log may be incrementally modified for every donated food or wasted food information update, and may also keep all data log records until a predetermined fixed file size or other user-defined milestone is achieved. The data log may then be stored in a local location and a new data log started. When the new data log file reaches the predetermined fixed file size of other user-defined milestone, the new data log file may be stored and the first stored data file may be overwritten or transferred to a secondary location.

FIGS. 7A-7F illustrate a multitude of different possible label formats that may be generated by the methods of the present invention, and the various types of information that may be included thereon. For example, the labels may include such information as the name and contact information of the foodservice location making the donation or disposal, date and time, food item description, quantity, unit of measure, product category and sub-category, department, reason for donation or disposal event, the recipient and its contact information, allergens, "best by", "use by" or other appropriate dates, instruction for processing or consuming the food item, the employee responsible for executing the donation or disposal event, the value of the food item being donated or disposed of, and any temperature or other constraints or limitations. Nonetheless, it will be appreciated by those of ordinary skill in the art that the label formats and options depicted in FIGS. 7A-7F are for illustrative purposes only, and that many other options and/or formats can also be employed to suit user need or preference.

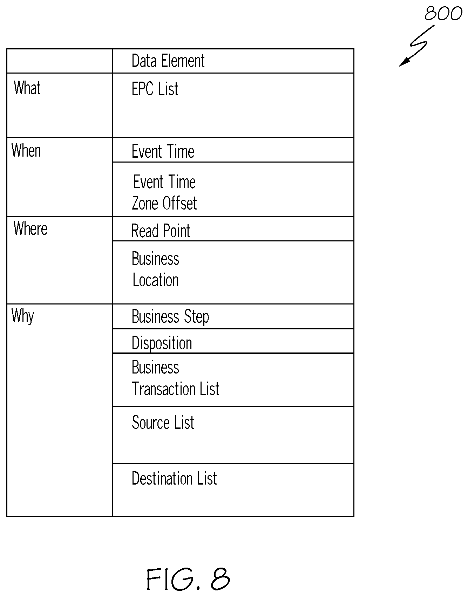

FIG. 8 illustrates one possible data set or record 800 that can be created, managed and modified by the methods of the present invention. More specifically, data record 800 can be used to communicate to the user, the downstream donee or waste recipient, or any other party the "what, when, where and why" of the donation or disposal event in a concise and easy to use format. Nonetheless, it will be appreciated by those of ordinary skill in the art that the data record format depicted in FIG. 8 is for illustrative purposes only, and that many other options and/or formats can also be employed to suit user need or preference. The data set may also be updated periodically during the donation or disposal event.

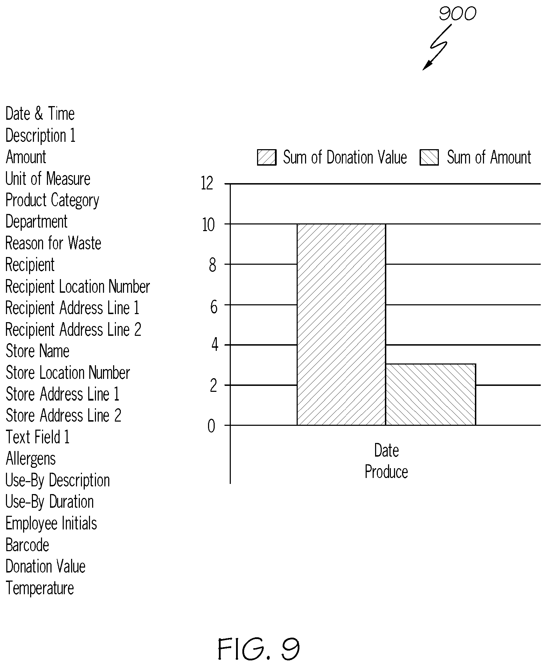

FIG. 9 illustrates one possible dashboard view of traceability data 900 that can be exhibited to a user as the result of the methods of the present invention in tabular and/or graphical representation in a dashboard or transactional log view. As illustrated in FIG. 9, such data set can include the following non- exhaustive list of attributes: date and time, food item description, quantity, unit of measure, product category and sub-category, department, reason for donation or disposal event, the recipient and its contact information, allergens, "best by", "use by" or other appropriate dates, the employee responsible for executing the donation or disposal event, the value of the food item being donated or disposed of, and any temperature or other constraints or limitations. Nonetheless, it will be appreciated by those of ordinary skill in the art that the traceability data 900 depicted in FIG. 9 is for illustrative purposes only, and that many other options and/or formats can also be employed to suit user need or preference. The traceability data 900 from the application may also be stored in format delimited with characters such as commas or semicolons, and can be used in conjunction with an appropriate spreadsheet software package for further analysis and reporting.

FIG. 10 illustrates a perspective view of one possible embodiment of an intelligent barcode printer 1000 having an interactive user display that could be used in conjunction with the methods of the present invention to label, mark, or otherwise tag the food product items designated for donation or disposal. Notwithstanding, intelligent printer 1000 is not limited to barcode printers and may be any other type of printer known in the art for producing labels that can be used to mark and/or track an object such as an RFID printer or a printer capable of printing quick response (QR) codes. For example, the inclusion of a QR code on the label attached to a donated food product item would permit the recipient, or any other user, to scan the QR code and obtain access to traceability information about the donated food item from a web page.

## Claims

1. A method of tracing a food product designated for a donation or disposal event comprising:
configuring an application to receive a data set (800) about the food product (300), wherein the step of configuring the application comprises creating a data log configured to log updates of traceability information of the donated or disposed of food product;
inputting the data set into the application, wherein the data set comprises one or more of the following: (a) a description of the food product; (b) a quantity of the food product; (c) an expiration date for the food product; and (d) a destination for the food product;
using the application to implement the donation or disposal event in relation to the food product by incrementally modifying the data log (44, 72) in relation to the donation or disposal event to update the traceability information of the donated or disposed of food product;
making the data set available to a user (216, 218);
printing (42) at least a portion of the data set and a scannable code onto a label, wherein scanning the code provides access to the traceability information about the donated food product from the data log; and
applying the label to the donated food product.

2. The method of claim 1 further comprising the step of updating the data set (800) during the donation or disposal event.

3. The method of claim 1, wherein the step of configuring the application further comprises selecting a category or a sub-category that includes the food product (106, 302).

4. The method of claim 1, wherein the step of configuring the application further comprises inputting a reason for the donation or disposal event (306).

5. The method of claim 1, wherein the step of configuring the application further comprises inputting the identity of the recipient of the food product (314).

6. The method of claim 1, wherein the step of making the data set available comprises posting the data set to at least one of the following: a server, a network, a cloud based application, or a hyper ledger.

7. The method of claim 1, wherein the step of making the data set available comprises storing the data set to a memory device.

8. The method of claim 1, wherein the step of making the data set available comprises displaying the data set on an interactive user display (1002).

9. The method of claim 1, wherein the scannable code is a barcode, QR code, or encoded in an RFID label.

## Patentansprüche

1. Verfahren zur Verfolgung eines Nahrungsmittels, das für ein Spenden- oder Wegwerfereignis bestimmt ist, umfassend:
Konfigurieren einer Anwendung, um einen Datensatz (800) über das Nahrungsmittel (300) zu empfangen, wobei der Schritt des Konfigurierens der Anwendung Erstellen eines Datenprotokolls umfasst, das dazu konfiguriert ist, Aktualisierungen von Verfolgbarkeitsinformationen des gespendeten oder weggeworfenen Nahrungsmittels zu protokollieren;
Eingeben des Datensatzes in die Anwendung, wobei der Datensatz eines oder mehrere des Folgenden umfasst: (a) eine Beschreibung des Nahrungsmittels; (b) eine Menge des Nahrungsmittels; (c) ein Verfallsdatum für das Nahrungsmittel; und (d) ein Ziel für das Nahrungsmittel;
Verwenden der Anwendung, um das Spenden- oder Wegwerfereignis in Bezug auf das Nahrungsmittel durch schrittweises Modifizieren des Datenprotokolls (44, 72) in Bezug auf das Spenden- oder Wegwerfereignis, um die Verfolgbarkeitsinformationen des gespendeten oder weggeworfenen Nahrungsmittels zu aktualisieren, zu implementieren;
Verfügbarmachen des Datensatzes für einen Benutzer (216, 218);
Drucken (42) von zumindest einem Abschnitt des Datensatzes und einem scannbaren Code auf ein Etikett, wobei das Scannen des Codes Zugriff auf die Verfolgbarkeitsinformationen über das gespendete Nahrungsmittel aus dem Datenprotokoll bereitstellt; und
Anbringen des Etiketts an dem gespendeten Nahrungsmittel.

2. Verfahren nach Anspruch 1, ferner umfassend den Schritt des Aktualisierens des Datensatzes (800) während des Spenden- oder Wegwerfereignisses.

3. Verfahren nach Anspruch 1, wobei der Schritt des Konfigurierens der Anwendung ferner Auswählen einer Kategorie oder einer Unterkategorie umfasst, die das Nahrungsmittel (106, 302) beinhaltet.

4. Verfahren nach Anspruch 1, wobei der Schritt des Konfigurierens der Anwendung ferner Eingeben eines Grundes für das Spenden- oder Wegwerfereignis (306) umfasst.

5. Verfahren nach Anspruch 1, wobei der Schritt des Konfigurierens der Anwendung ferner Eingeben der Identität des Empfängers des Nahrungsmittels (314) umfasst.

6. Verfahren nach Anspruch 1, wobei der Schritt des Verfügbarmachens des Datensatzes Posten des Datensatzes bei zumindest einem des Folgenden umfasst: einem Server, einem Netz, einer Cloud-basierten Anwendung oder einem Hyper-Ledger.

7. Verfahren nach Anspruch 1, wobei der Schritt des Verfügbarmachens des Datensatzes Speichern des Datensatzes in einer Speichervorrichtung umfasst.

8. Verfahren nach Anspruch 1, wobei der Schritt des Verfügbarmachens des Datensatzes Anzeigen des Datensatzes auf einer interaktiven Benutzeranzeige (1002) umfasst.

9. Verfahren nach Anspruch **1,** wobei der scanbare Code ein Barcode, QR-Code oder in einem RFID-Etikett codiert ist.

## Revendications

1. Procédé de suivi d'un produit alimentaire désigné pour un événement de don ou d'élimination comprenant :
la configuration d'une application pour recevoir un ensemble de données (800) concernant le produit alimentaire (300), ladite étape de configuration de l'application comprenant la création d'un journal de données configuré pour enregistrer les mises à jour des informations de traçabilité du produit alimentaire donné ou éliminé ;
la saisie de l'ensemble de données dans l'application, ledit ensemble de données comprenant un ou plusieurs des suivants : (a) une description du produit alimentaire ; (b) une quantité du produit alimentaire ; (c) une date de péremption du produit alimentaire ; et (d) une destination pour le produit alimentaire ;
l'utilisation de l'application pour mettre en œuvre l'événement de don ou d'élimination en relation avec le produit alimentaire en modifiant progressivement le journal de données (44, 72) en relation avec l'événement de don ou d'élimination pour mettre à jour les informations de traçabilité du produit alimentaire donné ou éliminé ;
la mise à disposition de l'ensemble de données à un utilisateur (216, 218) ;
l'impression (42) d'au moins une partie de l'ensemble de données et d'un code pouvant être balayé sur une étiquette, ledit balayage du code donnant accès aux informations de traçabilité sur le produit alimentaire donné à partir du journal de données ; et
l'application de l'étiquette sur le produit alimentaire donné.

2. Procédé de la revendication 1, comprenant en outre l'étape de mise à jour de l'ensemble de données (800) durant l'événement de don ou d'élimination.

3. Procédé de la revendication 1, ladite étape de configuration de l'application comprenant en outre la sélection d'une catégorie ou d'une sous-catégorie qui comprend le produit alimentaire (106, 302).

4. Procédé de la revendication 1, ladite étape de configuration de l'application comprenant en outre la saisie d'une raison de l'événement de don ou d'élimination (306).

5. Procédé de la revendication 1, ladite étape de configuration de l'application comprenant en outre la saisie de l'identité du destinataire du produit alimentaire (314).

6. Procédé de la revendication 1, ladite étape de mise à disposition de l'ensemble de données comprenant la publication de l'ensemble de données sur au moins l'un des suivants : un serveur, un réseau, une application en nuage ou un hyper registre.

7. Procédé de la revendication **1,** ladite étape de mise à disposition de l'ensemble de données comprenant le stockage de l'ensemble de données sur un dispositif de mémoire.

8. Procédé de la revendication **1,** ladite étape de mise à disposition de l'ensemble de données comprenant l'affichage de l'ensemble de données sur un dispositif d'affichage utilisateur interactif (1002).

9. Procédé de la revendication 1, ledit code pouvant être balayé étant un code à barres, un QR code ou codé dans une étiquette RFID.
